(19) Europäisches Patentamt / European Patent Office / Office européen des brevets

(11) **EP 2 153 538 B1**

(12) **EUROPÄISCHE PATENTSCHRIFT**

(45) Veröffentlichungstag und Bekanntmachung des Hinweises auf die Patenterteilung:
**18.04.2012 Patentblatt 2012/16**

(21) Anmeldenummer: **08759868.6**

(22) Anmeldetag: **21.05.2008**

(51) Int Cl.:
*H04B 5/00* (2006.01)     *H04W 88/06* (2009.01)
*H04W 76/02* (2009.01)     *H04W 84/10* (2009.01)

(86) Internationale Anmeldenummer:
**PCT/EP2008/056266**

(87) Internationale Veröffentlichungsnummer:
**WO 2008/142113 (27.11.2008 Gazette 2008/48)**

(54) **VERFAHREN UND VORRICHTUNG ZUR ELEKTRONISCHEN KOMMUNIKATION ZWISCHEN WENIGSTENS ZWEI KOMMUNIKATIONSGERÄTEN**

METHOD AND DEVICE FOR ELECTRONIC COMMUNICATION BETWEEN AT LEAST TWO COMMUNICATION DEVICES

PROCÉDÉ ET DISPOSITIF POUR LA COMMUNICATION ÉLECTRONIQUE ENTRE AU MOINS DEUX APPAREILS DE COMMUNICATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.05.2007 DE 102007023728**

(43) Veröffentlichungstag der Anmeldung:
**17.02.2010 Patentblatt 2010/07**

(73) Patentinhaber: **Ford Global Technologies, LLC Dearborn, MI 48126 (US)**

(72) Erfinder:
• **ARNDT, Christoph**
  **57583 Moerlen (DE)**
• **KUCK, Detlef**
  **52459 Inden (DE)**

(74) Vertreter: **Dörfler, Thomas**
  **Henry-Ford-Strasse 1**
  **50725 Köln (DE)**

(56) Entgegenhaltungen:
**WO-A-00/15931      US-A1- 2006 223 536
US-B1- 6 323 566**

EP 2 153 538 B1

**Beschreibung**

Die vorliegende Erfindung betrifft ein Verfahren und eine Vorrichtung zur elektronischen Kommunikation zwischen wenigstens zwei Kommunikationsgeräten.

In Kraftfahrzeugen finden mobile elektronische Geräte unterschiedlicher Art und Bestimmung (Mobiltelefone, tragbare Musikabspielgeräte, Navigationssysteme, PDAs etc.) in zunehmendem Maße Verwendung. Derartige Geräte sind in der Regel mit einer Schnittstelle (z.B. Bluetooth, USB, WiFi) zum Aufbau einer Verbindung mit dem Fahrzeugaufbau ausgestattet.

Die Kommunikationsverbindung über eine Datenkommunikations-Verbindung (z.B. (Bluetooth-Verbindung) erfordert eine vorherige Identifikation der zu verbindenden Kommunikationsgeräte. Insbesondere sind bei Vorhandensein mehrerer aktiver Datenkommunikations-Geräte die korrekterweise zu verbindenden Geräte vor der anschließenden Kommunikation auszuwählen (sog. "pairing"). Der Kontaktaufbau zwischen den Geräten erfordert hierbei vor Beginn der eigentlichen Kommunikation eine Mehrzahl von benutzerseitig manuell durchzuführenden Schritten, insbesondere die Einstellung des Datenkommunikations-Modus in den betreffenden Kommunikationsgeräten, die Überprüfung der Identifikationsnummern und in der Regel eine Passworteingabe in beide miteinander zu verbindende Kommunikationsgeräte.

Aus der EP 1 049 347 A1 ist ein Verfahren und eine Vorrichtung zum Aufbau einer Verbindung zwischen einer Kommunikationsvorrichtung (z.B. einem Mobiltelefon) und einem zugehörigen Fahrzeugeinbausatz über eine Funkverbindung, insbesondere eine Bluetooth-Verbindung, bekannt, bei welchem bei Annäherung des Benutzers an das Fahrzeug ohne mechanischen Kontakt zwischen Mobiltelefon und Fahrzeug der Fahrzeugeinbausatz das Funksignal von dem Mobiltelefon empfängt und im Fall einer positiven Benutzeridentifikation die Verbindung aufbaut, woraufhin dann die Steuerung des Mobiltelefons allein über den Fahrzeugeinbausatz erfolgt.

Aus der EP 1 188 617 A2 ist ein berührungsloses Bildtelefonsystem bekannt, bei welchem bei Einbringung eines tragbaren Bildtelefongeräts in ein Fahrzeug das Bildtelefongerät drahtlos mit Informationen über die Systemstruktur versorgt wird und gemäß diesen Informationen den Weg der Audio-Video-Daten von den bildtelefongerätseitigen Einrichtungen wie Mikrophon, Lautsprecher, Kamera und Bildschirmanzeige auf die entsprechenden bordseitigen Einrichtungen umschaltet.

Aus WO 00/15931 A1 ist ein elektronisches Kommunikationssystem für ein Fahrzeug mit einer im Fahrzeug angeordneten Basisstation und einem beweglichen Datenträger zum Austausch von Signalen mit der Basisstation bekannt, welches insbesondere für eine passive Zugangskontrolle oder eine passive Bewegungskontrolle (Wegfahrsperre) einsetzbar ist und bei der eine erste kapazitive Kopplungsstrecke wenigstens teilweise durch den Körper eines Benutzers geführt wird und bei dem eine zweite Kopplungsstrecke wenigstens teilweise durch den Boden gebildet wird.

Aus WO 98/57824 A1 ist eine Kraftfahrzeug-Einbauvorrichtung für ein Mobiltelefon bekannt, welche ein mit einer Antenne verbundenes HF-Sende-Empfangsteil und eine Schnittstelle zur Ermöglichung einer Übertragung von Steuersignalen zwischen der Kraftfahrzeug-Einbauvorrichtung und dem Mobiltelefon aufweist. Das HF-Sende-Empfangsteil ist dabei durch das Mobiltelefon steuerbar, wobei die Signalübertragung zwischen der Schnittstelle der Kraftfahrzeug-Einbauvorrichtung und dem Mobiltelefon vorzugsweise drahtlos mittels Infrarot erfolgt.

Aus WO 03/100739 A1 ist ein System und ein Verfahren zur Präsenzanalyse von Objekten unter Ausnutzung kapazitiver Wechselwirkungseffekte und insbesondere für den Einsatz in einem Kraftfahrzeugverriegelungssystem bekannt.

Aus der EP 1770900 A1 ist ein Verfahren zur drahtlosen elektronischen Kommunikation zwischen einer Mehrzahl von Kommunikationsvorrichtungen bekannt, bei welchem sowohl ein kurzreichweitiger, auf der Übertragung elektromagnetischer Wellen basierender erster Kopplungsmechanismus zur Übertragung von Frage- bzw. Antwortsignalen als auch ein vergleichsweise langreichweitiger zweiter Kopplungsmechanismus zur Durchführung der eigentlichen Datenkommunikation zum Einsatz kommen, wobei beide Kopplungsmechanismen mittels elektromagnetischer Wellen durchgeführt werden.

Aus US 2006/223536 A1 ist ein Verfahren zur Übergabe eines Kabellosen Kommunikationsgerätes zwischen Sendestationen bekannt, wobei diese Übergabe durch ein Nahfeld-Kommunikationssystem ausgelöst wird.

Es ist Aufgabe der vorliegenden Erfindung, ein Verfahren bzw. eine Vorrichtung zur elektronischen Kommunikation zwischen wenigstens zwei Kommunikationsgeräten bereitzustellen, welches bzw. welche bei einfacher Handhabung einen zuverlässigen Verbindungsaufbau zwischen den für die Kommunikation vorzusehenden Geräten ermöglicht.

Diese Aufgabe wird durch ein Verfahren mit den Merkmalen des unabhängigen Patentanspruches 1 bzw. durch eine Vorrichtung mit den Merkmalen des unabhängigen Patentanspruchs 11 gelöst.

Ein erfindungsgemäßes Verfahren zur elektronischen Kommunikation zwischen wenigstens zwei Kommunikationsgeräten, insbesondere in einem Kraftfahrzeug, weist folgende Schritte auf:

- Zuordnen zweier, für eine Datenkommunikation bestimmter Kommunikationsgeräte zueinander mittels einer zwischen diesen Kommunikationsgeräten über einen ersten Kopplungsmechanismus stattfindenden Kommunikation; und

- Durchführen der Datenkommunikation der einander zugeordneten Kommunikationsgeräte mittels einer zwischen diesen Kommunikationsgeräten über einen zweiten Kopplungsmechanismus stattfindenden Kommunikation, wobei der erste Kopplungsmechanismus eine kürzere Reichweite als der zweite Kopplungsmechanismus aufweist oder über einen körperlichen Kontakt zwischen den Kommunikationsgeräten erfolgt und wobei der erste Kopplungsmechanismus als kapazitiver Kopplungsmechanismus ausgebildet ist

Der Begriff "Datenkommunikation" soll in diesem Zusammenhang zum Ausdruck bringen, dass es sich um den Austausch der eigentlichen (Nutz-)Daten zwischen den Geräten handeln soll; im Unterschied zu der Kommunikation über den ersten Kopplungsmechanismus, über den im Wesentlichen Zuordnungs- und Protokollinformationen ausgetauscht werden.

In Rahmen der vorliegenden Anmeldung ist unter einem körperlichen Kontakt zwischen den Kommunikationsgeräten ein über den Körper eines beide Geräte berührenden Benutzers verlaufender Kontakt zu verstehen, wie in Weiteren noch näher erläutert werden wird.

Der vorliegenden Erfindung liegt das Prinzip zugrunde, die Zuordnung zweier, für eine Kommunikation miteinander bestimmter Kommunikationsgeräte zueinander einerseits und die eigentliche Kommunikation zwischen diesen Kommunikationsgeräten andererseits über unterschiedliche Kopplungsmechanismen durchzuführen, wobei der für die Zuordnung gewählte Kopplungsmechanismus vergleichsweise kurzreichweitig ist. Der für die Zuordnung gewählte Kopplungsmechanismus kann dabei insbesondere auch einen über den Körper eines zwei oder mehrere Kommunikationsgeräte berührenden Benutzers verlaufenden Kontakt beinhalten.

Infolge der kurzen Reichweite bzw. des Kontaktes kann eine eindeutige Zuordnung der korrekterweise hierfür bestimmten Kommunikationsgeräte erfolgen, wobei insbesondere bei Vorhandensein mehrerer in Frage kommender Kommunikationsgeräte die Gefahr einer unkorrekten Zuordnung und die Übertragung persönlicher und/oder geheimer Daten an das falsche Gerät vermieden werden kann. Dies geschieht, ohne dass hierzu weitere besondere Maßnahmen des Benutzers, insbesondere eine aufwendige manuelle Abarbeitung von Menüs zur Auswahl und Zuordnung von Geräten zueinander mittels einzugebender Passwörter erforderlich sind, so dass das Verfahren eine einfache Handhabung ermöglicht, wobei keine physikalische Verbindung zwischen den zu koppelnden Geräten über ein Kabel oder dergleichen erforderlich ist. Die Verwendung eines kapazitiven Kopplungsmechanismus für den ersten Kopplungsmechanismus (über welchen insbesondere Zuordnungs- und Protokollinformationen ausgetauscht werden können und der im Unterschied zu dem zweiten Kopplungsmechanismus nicht für den Austausch der eigentlichen Nutzdaten zwischen den Kommunikationsgeräten bestimmt ist) hat den Vorteil, dass der erste Kopplungsmechanismus besonders selektiv auf die Entfernung zwischen den zu koppelnden Geräten reagiert, so dass insbesondere ein versehentliches Koppeln nicht gewünschter bzw. nicht einander zuzuordnender Geräte oder ein Abhören in der Identifikationsphase von außen her nicht möglich ist.

Das Verfahren zeichnet sich somit durch maximale Robustheit und Abhörsicherheit aus, da nur die beiden insbesondere über den Körper der Person verbundenen Kommunikationsgeräte Daten austauschen und ein Abhören nur noch bei direktem Kontakt mit der betreffenden Person möglich und somit einfach zu kontrollieren bzw. zu vermeiden ist. Des Weiteren kann infolge des Einsatzes eines kapazitiven Kopplungsmechanismus zum Zwecke der Zuordnung zweier für eine Datenkommunikation bestimmter Kommunikationsgeräte zueinander erreicht werden, dass ein kapazitives "Pairing" insbesondere über den Körper des Benutzers eindeutig und abhörsicher erfolgen kann, ohne dass - wie etwa bei einem Pairing auf Basis des Austausches elektromagnetische Wellen - das zuzuordnende Gerät unter Abarbeitung einer Mehrzahl von Menüs oder Untermenüs aus einer Liste herausgesucht werden muss.

In einer bevorzugten Ausführungsform arbeiten sowohl der erste Kopplungsmechanismus als auch der zweite Kopplungsmechanismus jeweils mit einem drahtlosen Kommunikationsverfahren, wobei ein übertragenes Signal bei dem ersten Kopplungsmechanismus exponentiell stärker mit der Entfernung zwischen den zu koppelnden Geräten abfällt als bei dem zweiten Kopplungsmechanismus. D.h., ein zwischen den beiderseitigen Geräten übertragener Signalpegel $S_n$ (mit $n=1$ für den ersten Kopplungsmechanismus und $n=2$ für den zweiten Kopplungsmechanismus) nimmt jeweils abhängig von der Entfernung $r$ zwischen den zu koppelnden Geräten näherungsweise entsprechend einem Zusammenhang $S_n(r)/S_n(0) \approx 1/r^{x_n}$ ab, wobei $x_{1.2} \geq 1$ und $x_1 > x_2$. Für Funkwellen gilt - zumindest bei Ausbreitung im Vakuum - näherungsweise eine $1/r$-Signalabhängigkeit, wohingegen bei einer kapazitiven Kopplung das Signal zumindest näherungsweise wesentlich stärker exponentiell abfällt, so dass dieses bereits in relativ kurzer Entfernung nicht mehr vom Rauschen zu unterscheiden ist. Dies führt dazu, dass das erste Kopplungsverfahren sehr selektiv auf die Entfernung zwischen den zu koppelnden Geräten reagiert, so dass ein versehentliches Koppeln nicht gewünschter Geräte oder ein Abhören in der Identifikationsphase von außen her nicht möglich ist.

Vor diesem Hintergrund ist es in einer Ausführungsform der Erfindung denkbar, dass die Geräte in der Identifikationsphase einen kryptografischen Schlüssel über den ersten Kopplungsmechanismus abhörsicher austauschen, der dann im weiteren Verlauf der Kommunikation eine sichere verschlüsselte Übertragung über eine langreichweitigere (und daher prinzipiell abhörbare) Verbindung erlaubt. Diese Vorgehensweise ist insbesondere für die Verbindung bislang einander "unbekannter" Geräte vorteilhaft, bei denen noch kein gemeinsamer kryptografischer Schlüssel festgelegt ist, da Festlegung und Austausch eines gemeinsamen kryptografischen Schlüssels bei funkgestützter Datenkommunikation stets eine besonders kritische Phase darstellen, die über den ersten Kopplungsmechanismus nahezu abhörsicher erfolgen kann.

Gemäß einer weiteren bevorzugten Ausführungsform sind für die Herstellung des körperlichen Kontaktes zwischen den Kommunikationsgeräten Schaltflächen auf den Kommunikationsgeräten vorgesehen, welche jeweils einen kapazitiven Kontakt aufweisen, der eine Datenübertragung zwischen diesen Kommunikationsgeräten auf kapazitivem Wege ermöglicht. In dieser vorteilhaften Ausführung wird der Kontakt zwischen den Kommunikationsgeräten direkt hergestellt, indem Kontakte an beiden Kommunikationsgeräten von einer Person berührt bzw. gedrückt werden. Durch Drücken des Kontaktes wird das jeweilige Kommunikationsgerät aktiviert. Der erste Kopplungsmechanismus kann dann über einen auf der Schalteroberfläche angebrachten, kapazitiven Kontakt durchgeführt werden. Diese Art der Ausführung des ersten Kopplungsmechanismus führt ebenfalls eine kapazitive Datenübertragung aus und zeichnet sich durch maximale Robustheit und Abhörsicherheit aus. Die Identifikation der beiden Kommunikationsgeräte über die aktivierende Person ist abhörsicher, da nur die beiden aktivierten und über den Körper der Person verbundenen Kommunikationsgeräte Daten austauschen. Ein "Abhören" ist nur noch bei direktem Kontakt mit der betreffenden Person möglich und somit einfach zu kontrollieren bzw. zu vermeiden.

Gemäß einer bevorzugten Ausführungsform erfolgt der erste Kopplungsmechanismus insbesondere über eine kapazitive Kopplung, und der zweite Kopplungsmechanismus erfolgt über eine Funkverbindung, insbesondere eine Bluetooth-Verbindung. Selbstverständlich sind jedoch auch andere Funkverbindungssysteme wie z.B. WLAN, GSM, WiFi oder auch optische Übertragungssysteme (z.B. Infrarotübertragung) einsetzbar.

Gemäß einer bevorzugten Ausführungsform erfolgt vor dem Durchführen der Kommunikation der einander zugeordneten Kommunikationsgeräte über den zweiten Kopplungsmechanismus eine Identifizierung durch Übertragung wenigstens eines Identifizierungssignals zwischen den beiden einander zugeordneten Kommunikationsgeräten, was wiederum vorzugsweise ebenfalls über den ersten Kopplungsmechanismus erfolgt.

Beispielhaft wird vor dem Durchführen der Kommunikation der einander zugeordneten Kommunikationsgeräte über den zweiten Kopplungsmechanismus ein für den zweiten Kopplungsmechanismus charakteristisches Profil zwischen den beiden einander zugeordneten Kommunikationsgeräten übertragen, was wiederum vorzugsweise ebenfalls über den ersten Kopplungsmechanismus erfolgt.

Auch wenn in vorteilhaften Ausführungsformen - wie vorstehend erläutert - über den ersten Kopplungsmechanismus Daten zur Identifizierung der Geräte bzw. zur Vereinbarung eines kryptografischen Schlüssels ausgetauscht werden können, ist es im Rahmen der vorliegenden durchaus auch denkbar, die Kommunikation mittels des ersten Kopplungsmechanismus möglichst einfach zu halten, so dass für die entsprechende Kopplung auch ein unidirektionaler Datenaustausch ausreichen kann. Beispielsweise könnte ein Kommunikationsgerät alle über den zweiten Kopplungsmechanismus erreichbaren weiteren Kommunikationsgeräte über diesen zweiten Kopplungsmechanismus sequentiell hintereinander auffordern, ein Signal über den ersten Kopplungsmechanismus zu senden. Wird dieses Signal über den ersten Kopplungsmechanismus vom dem auffordernden Kommunikationsgerät empfangen, kann das entsprechende zu koppelnde Gerät damit eindeutig identifiziert werden. Die weitere Kommunikation, einschließlich der Identifikationsphase und des Profilabgleichs, findet dann über den zweiten Kopplungsmechanismus statt. In dieser Konstellation kann der erste Kopplungsmechanismus unidirektional ausgelegt werden (das auffordernde Kommunikationsgerät braucht über den ersten Kopplungsmechanismus lediglich Signale empfangen zu können, die anderen zu koppelnden Kommunikationsgeräte müssen lediglich senden können).

Gemäß einer bevorzugten Ausführungsform ist ein erstes Kommunikationsgerät der beiden Kommunikationsgeräte ein mobiles Kommunikationsgerät, insbesondere ein Mobiltelefon, ein PDA, ein tragbares Musikabspielgerät oder ein mobiles Navigationssystem, und ein zweites Kommunikationsgerät der beiden Kommunikationsgeräte ist in einem Kraftfahrzeug-Einbausatz vorgesehen. Die Erfindung ist jedoch nicht auf den Anwendungen in einem Kraftfahrzeug beschränkt, sondern vielmehr auch in Verbindung mit beliebigen Kommunikationsgeräten, z.B. bei einem Pairing zwischen einem PDA und einem Mobiltelefon oder mit Kopfhören einsetzbar.

Die Erfindung betrifft weiter eine Vorrichtung zur elektronischen Kommunikation zwischen wenigstens zwei Kommunikationsgeräten, welche zur Durchführung eines Verfahrens mit den oben beschriebenen Merkmalen ausgelegt ist. Bezüglich vorteilhafter Ausgestaltungen der Vorrichtung wird auf die Merkmale und Vorteile des oben beschriebenen Verfahrens verwiesen.

Weitere Ausgestaltungen der Erfindung sind der Beschreibung sowie den Unteransprüchen zu entnehmen.

Die Erfindung wird nachfolgend anhand der Zeichnungen beispielhaft näher erläutert. Es zeigen:

Figur 1     ein Blockdiagramm zur Erläuterung der erfindungsgemäß erfolgenden Zuordnung zweier für eine Kommunikation vorgesehener Geräte gemäß einer bevorzugten Ausführungsform;

Figur 2 - 3    Diagramme zur Erläuterung der Abstandsabhängigkeit des bei einem erfindungsgemäß eingesetzten ersten Kopplungsmechanismus gemäß einer bevorzugten Ausführungsform erhaltenen Nachweispegels;

Figur 4    ein Blockdiagramm zur Erläuterung einer erfindungsgemäßen Vorrichtung zur elektronischen Kommunikation gemäß einer bevorzugten Ausführungsform; und

Figur 5    ein Flussdiagramm zur Erläuterung des Ablaufs des erfindungsgemäßen Verfahrens.

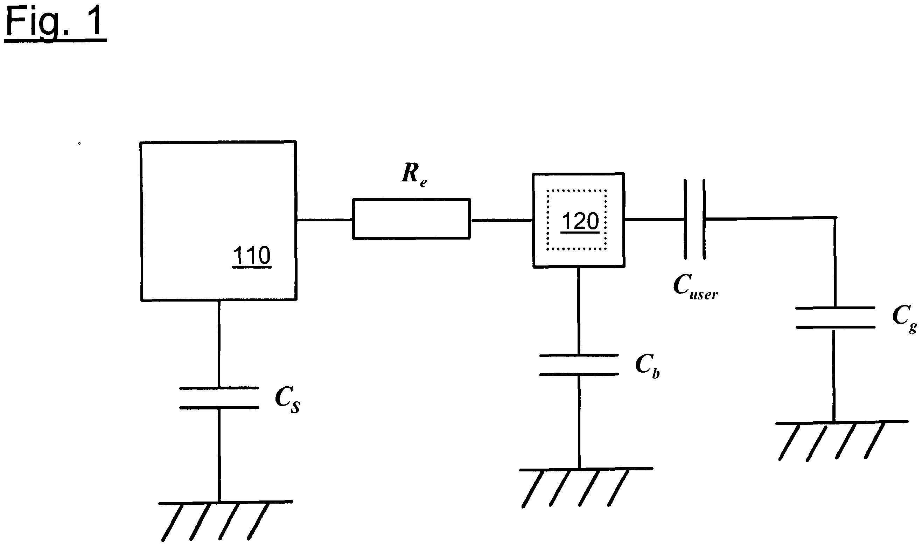

Anhand von Fig. 1 wird zunächst prinzipiell erläutert, wie gemäß der Erfindung die Zuordnung zweier für eine Kommunikation miteinander bestimmter Kommunikationsgeräte zueinander unter Ausnutzung eines kurzreichweitigen Kopplungsmechanismus erfolgt, und zwar gemäß dem Ausführungsbeispiel über eine kapazitive Kopplung. In Fig. 1 ist mit 110 eine Kapazitätssensorschaltung (in Form eines integrierten Schaltungselementes, IC) bezeichnet, welche mit einer Elektrode 120 elektrisch verbunden ist, wobei der zwischen Sensor 110 und Elektrode 120 vorliegende Referenzwiderstand mit $R_e$, die Kapazität der Elektrode 120 in Bezug auf Massepotential mit $C_b$ und die Kapazität des Kapazitätssensors 110 in Bezug auf Massepotential mit $C_s$ bezeichnet ist. Kapazitätssensorschaltung 110 und Elektrode 120 sind einem (in Fig. 1 nicht dargestellten) ersten Kommunikationsgerät zugeordnet, welches beispielsweise an einem fahrzeugseitigen Aufbau vorgesehen sein kann. Solange kein Benutzer in das System eingreift bzw. sich der Elektrode 120 nähert, lässt sich folgender Referenzwert

$$Reference\_value = k \cdot \frac{C_s}{C_b} \qquad (1)$$

definieren, wobei der Faktor k bei dem Aufbau von Fig. 1 abhängig ist von dem kapazitiven Sensor 110 sowie dem Referenzwiderstand $R_e$. Bezeichnet man ferner in der Anordnung von Fig. 1 mit $C_g$ die Kapazität der Strecke vom Benutzer zum Massepotential und mit $C_{user}$ die Gesamtkapazität des Benutzers, so gilt zunächst näherungsweise für die Gesamtkapazität des Benutzers $C_{user}$ die folgende Beziehung:

$$\frac{1}{C_{user\_all}} = \frac{1}{C_{user}} + \frac{1}{C_g} \approx \frac{1}{C_{user}} \qquad (2)$$

wegen

$$C_{user} << C_g \qquad (3)$$

Zunächst wird das System ohne Eingreifen eines Benutzers kalibriert. Sobald sich der Benutzer der Elektrode 120 nähert, ändert sich die Kapazität des Benutzers $C_{user} = C_u$ vom Wert Null auf einen messbaren endlichen Wert, und es ergibt sich

$$User\_value = k \cdot \frac{C_s}{C_u + C_b} \qquad (4)$$

Der Nachweispegel *Detection_level* entspricht der Differenz der beiden Werte, also *Reference_value- User_ value*, für welche gilt

$$Detection\_level = k \cdot \frac{C_s}{C_b} - k \cdot \frac{C_s}{C_u + C_b} = k \cdot C_s \cdot \left( \frac{1}{C_b} - \frac{1}{C_u + C_b} \right)$$

$$= k \cdot C_s \cdot \left( \frac{(C_u + C_b) - C_b}{C_b \cdot (C_u + C_b)} \right) \tag{5}$$

$$= k \cdot \frac{C_s}{C_b} \cdot \left( \frac{C_u}{C_u + C_b} \right)$$

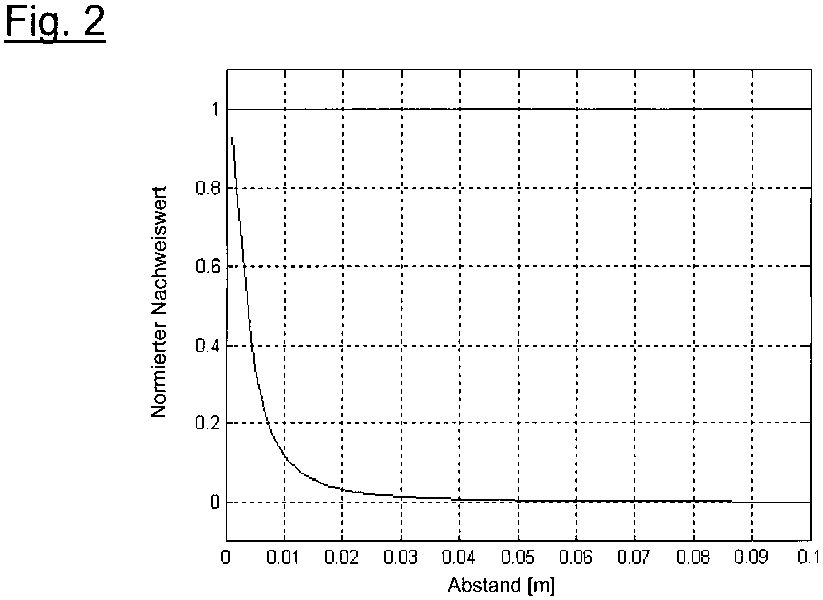

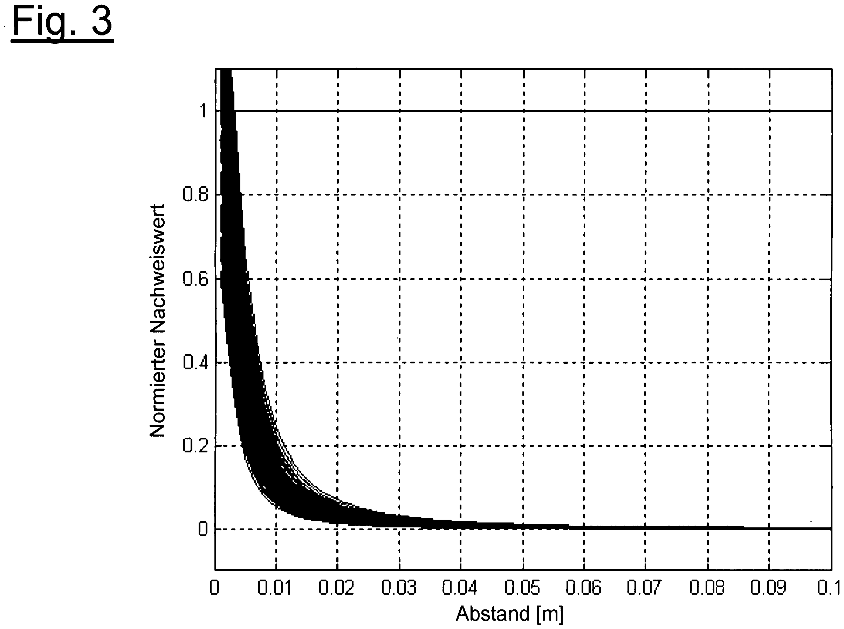

Wie aus Fig. 2 ersichtlich, fällt der Nachweispegel *Detection_level* mit zunehmendem Abstand zwischen dem Benutzer und der Elektrode 120 rapide ab, wobei sich beispielsweise in einer Entfernung vom 4 cm nur noch ein Nachweispegel von etwa 5% verglichen mit dem entsprechenden Nachweispegel für direkten Kontakt zwischen Benutzer und Elektrode 120 ergibt. Dieses Verhalten lässt sich gemäß Fig. 3 auch über eine Variation der Parameter (z.B. eine Variation von $C_s$ oder $C_u$) in Gleichung (3) nicht signifikant ändern.

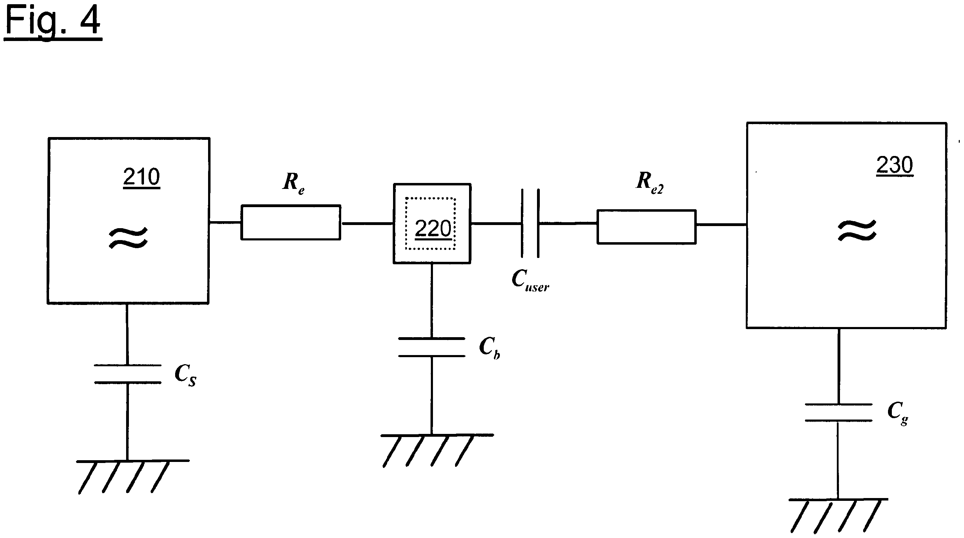

Für die eigentliche Kommunikation zwischen den Kommunikationsgeräten wird gemäß der bevorzugten Ausführungsform eine Datenkommunikations-Verbindung (z.B. eine Bluetooth-Verbindung) eingesetzt. Dabei kann in dem in Fig. 4 schematisch dargestellten Aufbau die beim Aufbau einer solchen Datenkommunikations-Verbindung vorgenommene Identifizierung sowie die Übertragung des geeigneten Identifikations-Profils ebenfalls über den kapazitiven Kopplungsmechanismus erfolgen, indem die beiden Kommunikationsgeräte als Sender/Empfänger modulierter Signale eingesetzt werden, d.h. z.B. von dem einen Gerät ein kodiertes Abfragesignal und von dem anderen Gerät ein kodiertes Antwortsignal ausgesandt wird.

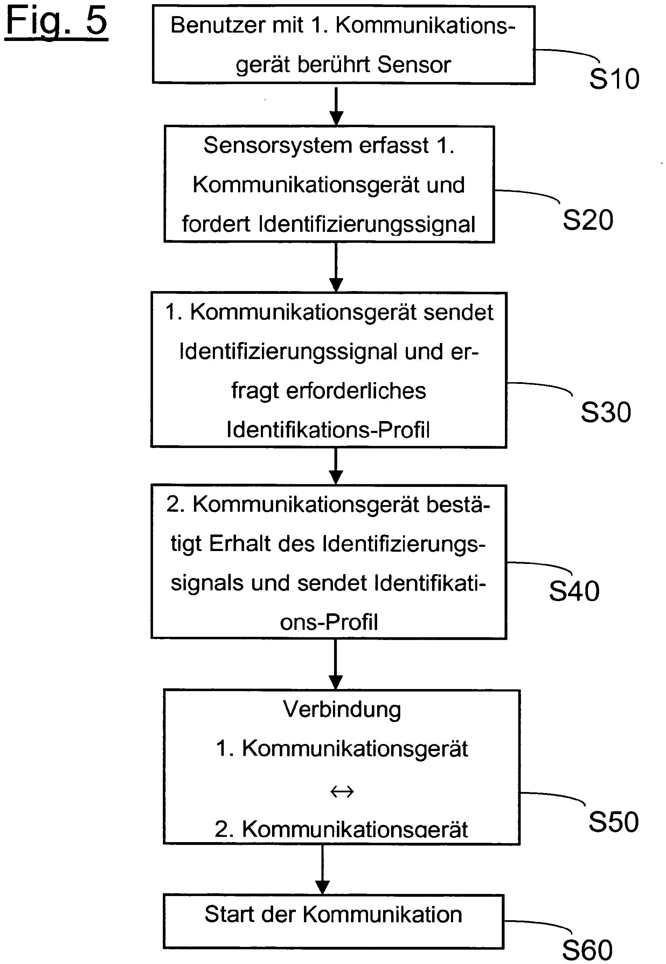

Im Einzelnen ist der Ablauf des erfindungsgemäßen Verfahrens zum Aufbau einer Kommunikation zwischen zwei Kommunikationsgeräten unter Bezugnahme auf das Blockdiagramm von Fig. 4 und gemäß dem in Fig. 5 gezeigten Flussdiagramm wie folgt:

In einem Schritt S10 berührt ein Benutzer, welcher ein mobiles Kommunikationsgerät 230 mit sich führt, einen am Kraftfahrzeug vorgesehenen Sensor zum Aufbau einer Verbindung mit einem am Fahrzeugaufbau vorgesehenen weiteren Kommunikationsgerät 110. Im Schritt S20 erfasst das Sensorsystem (d.h. der anhand von Fig. 1 beschriebene Kapazitätssensor 110) das in räumlicher Nähe des Sensorsystems befindliche mobile Kommunikationsgerät 230 und fordert von diesem ein Identifizierungssignal.

In einer (nicht dargestellten) alternativen Ausführungsform des Verfahrens kann auch darauf verzichtet werden, dass der Benutzer in Schritt S10 zunächst einen Sensor berühren muss, indem das Vorhandensein eines mobilen Kommunikationsgerätes im Empfangsbereich des Sensorsystems kontinuierlich abgefragt und bei Erkennung eines entsprechenden Gerätes automatisch mit Schritt S30 fortgefahren wird.

In Schritt S30 sendet das mobile Kommunikationsgerät 230 ein Identifizierungssignal und fragt das erforderliche Bluetooth-Profil ab. Im Schritt S40 sendet das am Fahrzeugaufbau vorgesehene Kommunikationsgerät 210 eine Bestätigung über den Erhalt des Identifizierungssignals und das erforderliche Identifikations-Profil. Im Schritt S50 wird das mobile Kommunikationsgerät 230 mit dem am Fahrzeugaufbau vorgesehenen Kommunikationsgerät 110 verbunden. Im Schritt S60 beginnt die Kommunikation über die Datenkommunikations-Verbindung.

Zur Realisierung einer sicheren und robusten Datenübertragung mittels des kapazitiven Weges kann insbesondere eine digitale Datenübertragung über Pseudo-Zufallsfolgen verwendet werden.

Aufgrund der Begrenzung auf kurze Reichweiten oder körperlichen Kontakt lässt sich erfindungsgemäß ein eindeutiges und spezifisches Zuordnen der Kommunikationsgeräte zueinander sowie eine sichere Datenübertragung erreichen. Auf diese Weise wird eine eindeutige und spezifische Identifizierung ermöglicht, um das jeweils korrekte Partnergerät für den Datenaustausch zu bestimmen und es wird ein einfach zu handhabendes Verfahren bereitgestellt, bei dem ein Durchlaufen mehrerer Untermenüs in beiden Kommunikationsgeräten entbehrlich ist.

**Patentansprüche**

1. Verfahren zur elektronischen Kommunikation zwischen wenigstens zwei Kommunikationsgeräten, insbesondere in einem Kraftfahrzeug,
   **dadurch gekennzeichnet, dass**
   das Verfahren folgende Schritte aufweist:

- Zuordnen zweier für eine Datenkommunikation bestimmter Kommunikationsgeräte (210, 230) zueinander mittels einer zwischen diesen Kommunikationsgeräten (210, 230) über einen ersten Kopplungsmechanismus stattfindenden Kommunikation; und
- Durchführen der Datenkommunikation der einander zugeordneten Kommunikationsgeräte (210, 230) mittels einer zwischen diesen Kommunikationsgeräten (210, 230) über einen zweiten Kopplungsmechanismus stattfindenden Kommunikation;

wobei der erste Kopplungsmechanismus eine kürzere Reichweite als der zweite Kopplungsmechanismus aufweist oder über einen über den Körper eines beide Kommunikationsgeräte (210, 230) berührenden Benutzers führenden körperlichen Kontakt erfolgt, und wobei der erste Kopplungsmechanismus als kapazitiver Kopplungsmechanismus ausgebildet ist.

2. Verfahren nach Anspruch 1,
   **dadurch gekennzeichnet, dass**
   für die Herstellung des körperlichen Kontaktes Schaltflächen auf den Kommunikationsgeräten (210, 230) vorgesehen sind, welche jeweils einen kapazitiven Kontakt aufweisen, der eine Datenübertragung zwischen diesen Kommunikationsgeräten (210, 230) auf kapazitivem Wege ermöglicht.

3. Verfahren nach Anspruch 1 oder 2,
   **dadurch gekennzeichnet, dass**
   der erste Kopplungsmechanismus und der zweite Kopplungsmechanismus jeweils mit einem drahtlosen Übertragungsverfahren arbeiten, wobei ein übertragenes Signal bei dem ersten Kopplungsmechanismus stärker näherungsweise exponentiell mit der Entfernung zwischen den zu koppelnden Geräten abfällt als bei dem zweiten Kopplungsmechanismus.

4. Verfahren nach einem der Ansprüche 1 bis 3,
   **dadurch gekennzeichnet, dass**
   beim Schritt des Zuordnens ein einem ersten Kommunikationsgerät (210) zuzuordnendes zweites Kommunikationsgerät (230) aus einer Gruppe von wenigstens zwei Kommunikationsgeräten ausgewählt wird, wobei die Reichweite des ersten Kopplungsmechanismus so gewählt ist, dass sie nicht gleichzeitig von zwei Kommunikationsgeräten dieser Gruppe in Bezug auf das erste Kommunikationsgerät unterschritten werden kann.

5. Verfahren nach einem der vorhergehenden Ansprüche,
   **dadurch gekennzeichnet, dass**
   der zweite Kopplungsmechanismus als Funkverbindung, insbesondere als digitale Funkverbindung nach dem Bluetooth-, WLAN-, GSM- oder WiFi-Standard oder als optisches Übertragungssystem, insbesondere als Infrarotübertragungssystem, ausgebildet ist.

6. Verfahren nach einem der vorhergehenden Ansprüche,
   **dadurch gekennzeichnet, dass**
   vor dem Durchführen der Kommunikation der einander zugeordneten Kommunikationsgeräte (210, 230) über den zweiten Kopplungsmechanismus eine Identifizierung durch Übertragung wenigstens eines Identifizierungssignals zwischen den beiden einander zugeordneten Kommunikationsgeräten (210, 230) erfolgt.

7. Verfahren nach Anspruch 6,
   **dadurch gekennzeichnet, dass**
   die Übertragung des wenigstens einen Identifizierungssignals ebenfalls über den ersten Kopplungsmechanismus erfolgt.

8. Verfahren nach einem der vorhergehenden Ansprüche,
   **dadurch gekennzeichnet, dass**
   ein Austausch eines kryptografischen Schlüssels zwischen den beiden einander zugeordneten Kommunikationsgeräten (210, 230) über den ersten Kopplungsmechanismus erfolgt, wobei mit diesem Schlüssel dann eine anschließende Kommunikation über den zweiten Kopplungsmechanismus verschlüsselt wird.

9. Verfahren nach einem der vorhergehenden Ansprüche,
   **dadurch gekennzeichnet, dass**
   ferner eine digitale Datenübertragung zwischen den Kommunikationsgeräten (210, 230) über Pseudo-Zufallsfolgen zur Realisierung einer sicheren und robusten Datenübertragung erfolgt.

10. Verfahren nach einem der vorhergehenden Ansprüche,
**dadurch gekennzeichnet, dass**
ein erstes Kommunikationsgerät (230) der beiden Kommunikationsgeräte ein mobiles Kommunikationsgerät, insbesondere ein Mobiltelefon, ein PDA, ein tragbares Musikabspielgerät oder ein mobiles Navigationssystem ist, und ein zweites Kommunikationsgerät (210) der beiden Kommunikationsgeräte in einem Kraftfahrzeug-Einbausatz vorgesehen ist.

11. Vorrichtung zur elektronischen Kommunikation zwischen wenigstens zwei Kommunikationsgeräten, wobei die Vorrichtung die wenigstens zwei Kommunikationsgeräte umfasst, und
**dadurch gekennzeichnet, dass** die Vorrichtung Mittel umfasst, die
zur Durchführung eines Verfahrens nach einem der vorhergehenden Ansprüche ausgebildet sind.

**Claims**

1. Method for electronic communication between at least two communication appliances, particularly in a motor vehicle, **characterized in that** the method has the following steps:

   - two communication appliances (210, 230) intended for data communication are associated with one another by means of communication taking place between these communication appliances (210, 230) via a first coupling mechanism, and
   - the data communication between the mutually associated communication appliances (210, 230) is performed by means of communication taking place between these communication appliances (210, 230) via a second coupling mechanism;

   wherein the first coupling mechanism has a shorter range than the second coupling mechanism or is effected by means of physical contact via the body of a user touching both communication appliances (210, 230), and wherein the first coupling mechanism is in the form of a capacitive coupling mechanism.

2. Method according to Claim 1,
**characterized in that**
for the purpose of making the physical contact there are buttons provided on the communication appliances (210, 230) which respectively have capacitive contact which allows data transmission between these communication appliances (210, 230) on a capacitive route.

3. Method according to Claim 1 or 2,
**characterized in that**
the first coupling mechanism and the second coupling mechanism respectively use a wireless transmission method, with a transmitted signal dropping approximately exponentially with the distance between the appliances which are to be coupled to a greater extent in the case of the first coupling mechanism than in the case of the second coupling mechanism.

4. Method according to one of Claims 1 to 3,
**characterized in that**
the step of association involves a second communication appliance (230) which is to be associated with a first communication appliance (210) being selected from a group of at least two communication appliances, with the range of the first coupling mechanism being chosen such that two communication appliances in this group cannot simultaneously be below it in relation to the first communication appliance.

5. Method according to one of the preceding claims,
**characterized in that**
the second coupling mechanism is in the form of a radio link, particularly in the form of a digital radio link based on the Bluetooth, WLAN, GSM or WiFi standard, or in the form of an optical transmission system, particularly in the form of an infrared transmission system.

6. Method according to one of the preceding claims,

**characterized in that**
prior to the performance of the communication between the mutually associated communication appliances (210, 230) the second coupling mechanism is used for identification by virtue of the transmission of at least one identification signal between the two mutually associated communication appliances (210, 230).

7.  Method according to Claim 6,
    **characterized in that**
    the at least one identification signal is likewise transmitted by means of the first coupling mechanism.

8.  Method according to one of the preceding claims,
    **characterized in that**
    a cryptographic key is exchanged between the two mutually associated communication appliances (210, 230) by means of the first coupling mechanism, said key then being used to encrypt subsequent communication by means of the second coupling mechanism.

9.  Method according to one of the preceding claims,
    **characterized in that**
    digital data transmission is also effected between the communication appliances (210, 230) by means of pseudo-random sequences for implementing secure and robust data transmission.

10. Method according to one of the preceding claims,
    **characterized in that**
    a first communication appliance (230) from the two communication appliances is a mobile communication appliance, particularly a mobile telephone, a PDA, a portable music player or a mobile navigation system, and a second communication appliance (210) from the two communication appliances is provided in a motor vehicle mounting kit.

11. Apparatus for electronic communication between at least two communication appliances, wherein the apparatus comprises the at least two communication appliances, and
    **characterized in that**
    the apparatus comprises means which are designed to carry out a method according to one of the preceding claims.

## Revendications

1.  Procédé de communication électronique entre au moins deux appareils de communication, notamment dans un véhicule automobile, **caractérisé en ce que** le procédé présente les étapes suivantes :

    - association l'un à l'autre de deux appareils de communication (210, 230) conçus pour une communication de données au moyen d'une communication qui se déroule entre ces appareils de communication (210, 230) par le biais d'un premier mécanisme de connexion ; et
    - réalisation de la communication de données des appareils de communication (210, 230) associés l'un à l'autre au moyen d'une communication qui se déroule entre ces appareils de communication (210, 230) par le biais d'un deuxième mécanisme de connexion ;

    le premier mécanisme de connexion présentant une portée plus courte que le deuxième mécanisme de connexion ou s'effectuant par le biais d'un contact physique qui passe par le corps d'un utilisateur qui touche les deux appareils de communication (210, 230) et le premier mécanisme de connexion étant réalisé sous la forme d'un mécanisme de connexion capacitif.

2.  Procédé selon la revendication 1, **caractérisé en ce que** des boutons de commande sont prévus sur les appareils de communication (210, 230) pour l'établissement du contact physique, lesquels présentent respectivement un contact capacitif qui permet une transmission de données par voie capacitive entre ces appareils de communication (210, 230).

3.  Procédé selon la revendication 1 ou 2, **caractérisé en ce que** le premier mécanisme de connexion et le deuxième mécanisme de connexion fonctionnent respectivement avec un procédé de transmission sans fil, un signal transmis chutant de manière approximativement exponentielle en fonction de la distance entre les appareils à connecter plus fortement au niveau du premier mécanisme de connexion qu'au niveau du deuxième mécanisme de connexion.

**4.** Procédé selon l'une des revendications 1 à 3, **caractérisé en ce que** lors de l'étape d'association, un deuxième appareil de communication (230) à associer à un premier appareil de communication (210) est choisi dans un groupe d'au moins deux appareils de communication, la portée du premier mécanisme de connexion étant choisie de telle sorte qu'elle ne puisse pas être franchie vers le bas simultanément par deux appareils de communication de ce groupe par rapport au premier appareil de communication.

**5.** Procédé selon l'une des revendications précédentes, **caractérisé en ce que** le deuxième mécanisme de connexion est réalisé sous la forme d'une liaison hertzienne, notamment sous la forme d'une liaison hertzienne numérique selon la norme Bluetooth, WLAN, GSM ou Wifi, ou sous la forme d'un système de transmission optique, notamment sous la forme d'un système de transmission à infrarouges.

**6.** Procédé selon l'une des revendications précédentes, **caractérisé en ce qu'**avant de réaliser la communication des appareils de communication (210, 230) associés l'un à l'autre par le biais du deuxième mécanisme de connexion, une identification a lieu par transmission d'au moins un signal d'identification entre les deux appareils de communication (210, 230) associés l'un à l'autre.

**7.** Procédé selon la revendication 6, **caractérisé en ce que** la transmission de l'au moins un signal d'identification s'effectue également par le biais du premier mécanisme de connexion.

**8.** Procédé selon l'une des revendications précédentes, **caractérisé en ce qu'**un échange d'une clé cryptographique entre les deux appareils de communication (210, 230) associés l'un à l'autre s'effectue par le biais du premier mécanisme de connexion, une communication qui suit étant ensuite cryptée avec cette clé par le biais du deuxième mécanisme de connexion.

**9.** Procédé selon l'une des revendications précédentes, **caractérisé en ce qu'**une transmission de données numérique entre les appareils de communication (210, 230) a en plus lieu par le biais de séquences pseudo-aléatoires en vue de réaliser une transmission de données robuste et sécurisée.

**10.** Procédé selon l'une des revendications précédentes, **caractérisé en ce qu'**un premier appareil de communication (230) des deux appareils de communication est un appareil de communication mobile, notamment un téléphone mobile, un PDA, un lecteur de musique portable ou un système de navigation mobile, et un deuxième appareil de communication (210) des deux appareils de communication est prévu dans un ensemble intégré dans un véhicule automobile.

**11.** Dispositif de communication électronique entre au moins deux appareils de communication, le dispositif incluant les au moins deux appareils de communication, et **caractérisé en ce que** le dispositif inclut des moyens qui sont configurés pour mettre en oeuvre un procédé selon l'une des revendications précédentes.

# Fig. 1

EP 2 153 538 B1

Fig. 2

Fig. 3

Fig. 4

230

$C_g$

$R_{e2}$

$C_{user}$

$C_b$

220

$R_e$

210

$C_s$

Fig. 5

| Benutzer mit 1. Kommunikations-gerät berührt Sensor | S10 |

↓

| Sensorsystem erfasst 1. Kommunikationsgerät und fordert Identifizierungssignal | S20 |

↓

| 1. Kommunikationsgerät sendet Identifizierungssignal und er-fragt erforderliches Identifikations-Profil | S30 |

↓

| 2. Kommunikationsgerät bestä-tigt Erhalt des Identifizierungs-signals und sendet Identifikati-ons-Profil | S40 |

↓

| Verbindung<br>1. Kommunikationsgerät<br>↔<br>2. Kommunikationsgerät | S50 |

↓

| Start der Kommunikation | S60 |

**EP 2 153 538 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1049347 A1
- EP 1188617 A2
- WO 0015931 A1
- WO 9857824 A1
- WO 03100739 A1
- EP 1770900 A1
- US 2006223536 A1